# EUROPÄISCHE PATENTSCHRIFT

(11) **EP 0 836 625 B1**
(45) Veröffentlichungstag und Bekanntmachung des Hinweises auf die Patenterteilung: **29.12.1999**
(21) Anmeldenummer: 96923950.8
(22) Anmeldetag: 27.06.1996
(51) Int. Cl.: C08F 12/00, C08L 25/00

(54) **ANTITROPFMITTEL FÜR THERMOPLASTISCHE FORMMASSEN**
ANTIDRIP AGENTS FOR THERMOPLASTIC MOLDING COMPOUNDS
AGENTS ANTIGOUTTES POUR MATIERES DE MOULAGE THERMOPLASTIQUES

(30) Priorität: 06.07.1995 DE 19524585
(43) Veröffentlichungstag der Anmeldung: 22.04.1998
(73) Patentinhaber: BASF AKTIENGESELLSCHAFT, 67056 Ludwigshafen (DE)
(72) Erfinder: WEBER, Martin, D-67487 Maikammer (DE); HOFMANN, Jürgen, D-67069 Ludwigshafen (DE); WEISS, Robert, D-67281 Kirchheim (DE); HECKMANN, Walter, D-69469 Weinheim (DE); HINGMANN, Roland, D-68526 Ladenburg (DE); WÜNSCH, Josef, D-67105 Schifferstadt (DE); MCKEE, Graham, Edmund, D-67433 Neustadt (DE)
(86) Internationale Anmeldenummer: EP9602803
(87) Internationale Veröffentlichungsnummer: WO9702299

(56) Entgegenhaltungen:
- EP-A- 0 192 154
- EP-A- 0 342 234
- EP-A- 0 439 817
- EP-A- 0 523 790
- EP-A- 0 530 695
- EP-A- 0 562 178
- WO-A-95/05405
- DE-A- 3 434 973
- US-A- 4 277 575
- US-A- 4 308 360
- DATABASE WPI Section Ch, Week 8644 Derwent Publications Ltd., London, GB; Class A13, AN 86-288468 XP002018233 & JP,A,61 211 318 (ASAHI CHEMICAL IND KK) , 19.September 1986

## Beschreibung

Die vorliegende Erfindung betrifft die Verwendung von Polymeren auf der Basis vinylaromatischer Monomerer mit Molekulargewichten (M_{w}) von mindestens 800 000 g/mol und einer Molmassenverteilung, ausgedrückt durch das Verhältnis von Gewichtsmittelwert M_{w} zu Zahlenmittelwert Mₙ von 2 oder kleiner, als halogenfreie Antitropfmittel für thermoplastische Formmassen. Bevorzugte Ausführungsformen sind den Unteransprüchen und der Beschreibung zu entnehmen.

Werden thermoplastische Materialen entzündet, erweichen diese (sofern keine Vernetzungsreaktionen eintreten) zumeist recht schnell, da ihre Viskosität aufgrund der hohen Temperaturen stark abnimmt. Häufig trennen sich daher Teile des Materials vom Formkörper ab. Dieser Vorgang wird als Abtropfen oder, falls die Probe noch brennt, als brennendes Abtropfen bezeichnet. Durch abtropfende Materialteile können leicht andere Gegenstände entzündet und so ein Brandherd weitergetragen werden. Deshalb wurden bereits erhebliche Anstrengungen unternommen, wirksame Antitropfmittel für thermoplastische Formmassen zu entwickeln.

Halogenhaltige Polymere wie Polytetrafluorethylene wirken zwar dem Abtropfen entgegen, sollten aber aus Gründen der Umweltverträglichkeit vermieden werden. Als halogenfreie Antitropfmittel wurden in der EP-A-550 204 hochmolekulare Polyethylene für thermoplastische Formmassen aus Polyphenylenethern und schlagzäh modifizierten Polystyrolen (HIPS) beschrieben. Es hat sich jedoch erwiesen, daß bereits kleine Mengen an hochmolekularem Polyethylen die mechanischen Eigenschaften gerade dieser Formmassen beeinträchtigt. Insbesondere fällt die Schädigungsarbeit drastisch ab. In der EP-A-305 764 werden Polystyrole mit Molekulargewichten von mehr als 400 000 g/mol und breiter Molmassenverteilung als Antitropfmittel für Blends aus Polyphenylenethern und HIPS empfohlen. Zum einen setzen diese Antitropfmittel die Abtropfneigung der thermoplastischen Formmassen noch nicht genügend herab, zum anderen erhöhen sie die Schmelzeviskosität bei den für die Spritzgußverarbeitung relevanten Schergeschwindigkeiten. Auch die Zähigkeit der Formmassen wird mit steigendem Anteil an Antitropfmittel herabgesetzt.

Daß Mischungen aus Polyphenylenthern und HIPS noch zusätzlich Polystyrole enthalten können, ist ferner beispielsweise aus den US-A-4,128,602, 4,128,603 und 5,008,314 sowie der EP-A-476 366 bekannt. Die in der US-A-5,008,314 beschriebenen Formmassen weisen verbesserte Spannungsrißbeständigkeiten auf und die der EP-A-476 366 eignen sich insbesondere für die Blasformverarbeitung. EP-A-0 342 234 betrifft ein vinylaromatisches Polymer mit einem Mw/Mn von 2.0-2.5 und Mw von 3 000 000 bzw 960 000. WO-A-95/05405 beschreibt ein vinylaromatisches Polymer mit einem Mw/Mn von wenigstens 2.03 und Mw von wenigstens 800 000. Ein Hinweis diese Polymeren als Antitropfmittel zu verwenden findet sich nicht.

Aufgabe der vorliegenden Erfindung war es, wirksame halogenfreie Antitropfmittel für thermoplastische Formmassen, insbesondere für Polyphenylenether/HIPS Mischungen zu finden, die die mechanischen Eigenschaften der Blends möglichst wenig beeinflussen.

Diese Aufgabe wird durch die Verwendung der eingangs definierten Polymeren als Antitropfmittel erfüllt.

Die erfindungsgemäß als halogenfreie Antitropfmittel verwendbare Polymeren auf der Basis vinylaromatischer Monomerer können sowohl Homopolymere als auch statistische Copolymere oder Blockcopolymere wie alternierende Blockcopolymere, Sternblockcopolymere oder Drei- oder Fünfblockcopolymere sein. Es kommen auch Mischungen unterschiedlicher Polymerer in Betracht. Bevorzugt werden Homopolymere eingesetzt. Die Polymeren auf der Basis vinylaromatischer Monomerer können sowohl syndiotaktisch als auch ataktisch sein. Meist werden jedoch ataktische Polymere auf der Basis vinylaromatischer Monomerer eingesetzt.

Geeignete vinylaromatische Monomere haben in der Regel 8 bis 12 Kohlenstoffatome. Insbesondere kommen Styrol oder kern- oder seitenkettensubstituierte Styrole in Betracht. Als Beispiele seien o-Methylstyrol, m-Methylstyrol, p-Methylstyrol, und p-t-Butylstyrol genannt.

Daneben können auch andere Monomere mitverwendet werden, insbesondere solche, die sich anionisch mit den genannten Monomeren copolymerisieren lassen. Hierzu zählen Acrylnitril, Methacrylnitril, 2-Vinylpyridin, 4-Vinylpyridin und Vinylpyrrolidon.

Ganz besonders bevorzugte erfindungsgemäß als Antitropfmittel verwendbare Polymere enthalten Polystyrolhomopolymere.

Erfindungsgemäß weisen die Polymeren auf Basis vinylaromatischer Monomerer Molekulargewichte (Gewichtsmittelwert M_{w}) von mindestens 800 000 g/mol, beispielsweise 900 000 g/mol oder mehr auf. Im allgemeinen liegen die Molekulargewichte (M_{w}) im Bereich von 800 000 bis 2,8 x 10⁶ g/mol, bevorzugt im Bereich von 1 x 10⁶ bis 2,5 x 10⁶ g/mol. Im allgemeinen sind Polymere auf der Basis vinylaromatischer Monomerer mit Molekulargewichten (M_{w}) von mehr als 3 x 10⁶ g/mol nur noch schwer herstellbar und daher nicht bevorzugt. Nach einer besonders bevorzugten Ausführungsform liegen die Molekulargewichte (M_{w}) im Bereich von 1,1 x 10⁶ bis 2,3 x 10⁶, insbesondere 1,2 x 10⁶ bis 2,2 x 10⁶ g/mol. Die erfindungsgemäß als Antitropfmittel verwendbaren Polymeren können in unterschiedlichen thermoplastischen Formmassen eingesetzt werden. Besonders günstig ist es, die erfindungsgemäß als Antitropfmittel verwendbaren Polymeren in thermoplastischen Formmassen einzusetzen, die mit den erfindungsgemäßen Antitropfmitteln verträglich sind. Dies bedeutet, daß die erfindungsgemäß als Antitropfmittel verwendbaren Polymeren bevorzugt mit der Matrix der thermoplastischen Formmasse mischbar sind oder sich in dieser gut dispergieren lassen.

Erfindungsgemäß haben die Polymere auf der Basis vinylaromatischer Monomerer eine Molmassenverteilung, d.h. das Verhältnis von Gewichtsmittel- zu Zahlenmittelwert der Molmassen M_{w} /Mₙ von 2 oder kleiner, beispielsweise weniger als 1,8.

Die Polymeren auf Basis vinylaromatischer Monomerer, die erfindungsgemäß als Antitropfmitteln verwendbar sind, werden bevorzugt durch anionische Polymerisation hergestellt. Besonders bevorzugt wird die anionische Dispersionspolymerisation.

Anionische Polymerisationsverfahren sind an sich bekannt. Im allgemeinen wird die Polymerisation in Gegenwart stoichiometrischer Mengen organischer Lithiumverbindungen, bevorzugt Alkyllithiumverbindungen, insbesondere n-Butyllithium, s-Butyllithium oder t-Butyllithium durchgeführt.

Bei der anionischen Dispersionspolymerisation wird die Reaktion in der Regel in einem inerten Lösungsmittel, in dem das Polymer nicht löslich ist, durchgeführt. Die Reaktion kann auch in einer Lösungsmittelmischung aus kurzkettigen und langkettigen aliphatischen Kohlenwasserstoffen ausgeführt werden.

Zu den geeigneten Lösungsmitteln zählen Butan, Isobutan, Pentan, Isopentan, Hexan, Heptan, 2,2-Dimethylbutan, Petrolether oder Cyclohexan. Diese können in Mischung mit Kohlenwasserstoffen, die 14 oder mehr Kohlenstoffatome aufweisen, verwendet werden, darunter Tetradekan, Hexadekan, Octadekan oder Eicosan sowie flüssige Oligomere von Olefinen wie Ethylen oder höhere Olefine mit 3 bis 12 Kohlenstoffatomen wie Decen.

Feste Oligomere der genannten Olefine oder auch Polystyrole oder Polysiloxane niedrigen Molekulargewichts können als Cosolventien mitverwendet werden.

Die Reaktion kann auch in Gegenwart polymerer Dispergierhilfsmittel ausgeführt werden, die das gebildete Polymere in Suspension halten. Als Dispergierhilfsmittel kommen z.B. Copolymerisate aus Styrol und Butadien, Isopren oder hydrogenierten Isoprenen in Betracht.

Ganz besonders bevorzugt wird Pentan als Lösungsmittel und Styrol-Butadien-Blockcopolymere als Dispergierhilfsmittel eingesetzt.

Geeignete Styrol-Butadien-Blockcopolymere sind z.B. Zweiblockcopolymere des Typs a-b, wobei a einen Polymerblock aus Styrol und b einen Polymerblock aus Butadien, bevorzugt 1,4-Polybutadien, bedeutet. Die Summe der Komponenten a und b beträgt 100 Gew.-%, wobei die Zusammensetzung von a und b variieren kann. So kann a von 10 bis 90 Gew.-% und entsprechend b von 90 bis 10 Gew.-%, bevorzugt aber a zwischen 20 und 80 Gew.-% und b zwischen 80 bis 20 Gew.-% liegen.

Geeignet sind z.B. die Handelsprodukte ®Nippon NS 312, ®Buna KA 8497, ®Kraton G 1701X und ®Septon 1001.

Ein besonders geeignetes Styrol-Butadien-Blockcopolymer ist z.B. ein Styrol-Butadien-Zweiblockcopolymer, das hydriert sein kann und das in einer Menge von z.B. 1 bis 10 Gew.-% bezogen auf das vinylaromatische Monomere verwendet wird. Zweckmäßig wird es der zu polymerisierenden Dispersion gelöst im Monomeren zugesetzt.

Zur Herstellung statistischer Copolymerer können Verbindungen mitverwendet werden, die die Tendenz zur statistischen Verteilung fördern. Derartige Verbindungen sind z.B. Tetrahydrofuran, Tetramethylethylendiamin, Kaliumamylat oder t-Butylphosphat.

Das Polymerisationsverfahren wird meist bei Temperaturen im Bereich von 0 bis 100°C durchgeführt. Bevorzugte Reaktionstemperaturen liegen im Bereich von 0 bis 30°C. Die Reaktion kann sowohl bei Normaldruck als auch bei erhöhten Drucken durchgeführt werden.

Meist genügt es, wenn die Antitropfmittel in kleinen Mengen, z.B. etwa 0,5 bis 25 Gew.-%, bezogen auf die gesamte Zusammensetzung, in den thermoplastischen Formmassen enthalten sind. Bevorzugte Zusammensetzungen aus thermoplastischen Formmassen und Antitropfmitteln enthalten 1 bis 20, insbesondere 1 bis 15 Gew.-% Antitropfmittel.

Bevorzugt werden die erfindungsgemäß als Antitropfmittel einsetzbaren Polymere in Zusammensetzungen verwendet, die Polyphenylenether und vinylaromatische Polymere enthalten.

Besonders bevorzugt werden Zusammensetzungen, die
A) 0,5 bis 25 Gew.-% Antitropfmittel gemäß einem der Ansprüche 1 bis 3,
B) 5 bis 97,5 Gew.-% Polyphenylenether,
C) 1 bis 93,5 Gew.-% vinylaromatische Polymere, die sich von denen im Antitropfmittel enthaltenen Polymeren unterscheiden,
D) 0 bis 50 Gew.-% Schlagzähmodifier,
E) 1 bis 20 Gew.-% Flammschutzmittel sowie
F) 0 bis 60 Gew.-% Zusatzstoffe oder Verarbeitungshilfsmittel oder deren Mischungen
enthalten.

### Komponente A

Die erfindungsgemäß als Antitropfmittel verwendbaren Polymeren sind in den Zusammensetzungen als Komponente A erfindungsgemäß von 0,5 bis 25 Gew.-%, bevorzugt von 0,5 bis 15 Gew.-%, insbesondere von 0,5 bis 10 Gew.-%, bezogen auf die gesamte Zusammensetzung, enthalten.

### Komponente B

Die Polyphenylenether B sind in den Zusammensetzungen erfindungsgemäß in einer Menge von 5 bis 97,5, bevorzugt von 10 bis 93,5, insbesondere von 15 bis 88,5 Gew.-%, bezogen auf die gesamte Zusammensetzung, enthalten.

Die Polyphenylenether B sind an sich bekannt. Es handelt sich um Verbindungen auf Basis von substituierten, insbesondere disubstituierten Polyphenylethern, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome wie Chlor oder Brom und Alklyreste mit 1 bis 4 Kohlenwasserstoffatomen, die vorzugsweise kein α-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether B sind
Poly(2,6-dilauryl-1,4-phenylenether),
Poly(2,6-diphenyl-1,4-phenylenether),
Poly(2,6-dimethoxi-1,4-phenylenether),
Poly(2,6-diethoxi-1,4-phenylenether),
Poly(2-methoxy-6-ethoxi-1,4-phenylenether),
Poly(2-ethyl-6-stearyloxi-1,4-phenylenether),
Poly(2,6-dichlor-1,4-phenylenether),
Poly(2-methyl-6-phenyl-1,4-phenylenether),
Poly(2,6-dibenzyl-1,4-phenylenether),
Poly(2-ethoxi-1,4-phenylenether),
Poly(2-chlor-1,4-phenylenether),
Poly (2,5-dibrom-1,4-phenylenether).

Bevorzugt werden Polyphenylenether eingesetzt, bei denen die Substituenten Alkyreste mit 1 bis 4 Kohlenstoffatomen sind, wie
Poly(2,6-dimethyl-1,4-phenylenether),
Poly(2,6-diethyl-1,4-phenylenether),
Poly(2-methyl-6-ethyl-1,4-phenylenether),
Poly(2-methyl-6-propyl-1,4-phenylenether),
Poly(2,6-dipropyl-1,4-phenylenether) und
Poly(2-ethyl-6-propyl-1,4-phenylenether).

Unter Polyphenylenethern im Sinne der Erfindung sollen auch solche verstanden werden, die mit Monomeren wie Fumarsäure, Maleinsäure oder Maleinsäureanhydrid modifiziert sind.

Derartige Polyphenylenether sind u.a. in der WO 87/00540 beschrieben.

Hinsichtlich der physikalischen Eigenschaften der Polyphenylenether werden solche in den Zusammensetzungen eingesetzt, die ein mittleres Molekulargewicht M_{w} (Gewichtsmittel) von 8 000 bis 70 000, bevorzugt 12 000 bis 50 000 und insbesondere 20 000 bis 45 000 aufweisen.

Dies entspricht einer Grenzviskosität von 0,18 bis 0,7, bevorzugt von 0,25 bis 0,55, und insbesondere von 0,30 bis 0,50 dl/g, gemessen in Chloroform bei 25°C.

Die Bestimmung der Molekulargewichtsverteilung erfolgt im allgemeinen mittels Gelpermeationschromatograhpie (Shodex-Trennsäulen 0,8 x 50 cm des Typs A 803, A 804 und A 805 mit THF als Elutionsmittel bei Raumtemperatur). Die Lösung der Polyphenylenether-Proben in THF erfolgt unter Druck bei 110°C, wobei 0,16 ml einer 0,25 gew.-%igen Lösung injiziert werden.

Die Detektion erfolgt im allgemeinen mit einem UV-Detektor. Die Eichung der Säulen wurde mit Polyphenylenether-Proben durchgeführt, deren absolute Molekulargewichtsverteilungen durch eine GPC-Laser-Lichtstreuungskombination bestimmt wurde.

### Komponente C

Die Komponente C ist in den Zusammensetzungen erfindungsgemäß in Mengen von 1 bis 93,5, bevorzugt von 5 bis 88,5, insbesondere von 10 bis 83,5 Gew.-%, bezogen auf das Gesamtgewicht der Zusammensetzung, enthalten.

Die Komponente C sind vinylaromatische Polymere, die vorzugsweise mit dem eingesetzten Polyphenylenether verträglich sind. Die vinylaromatischen Polymere C unterscheiden sich von denen im Antitropfmittel enthaltenden Polymeren.

Es kommen sowohl Homo- als auch Copolymerisate von vinylaromatischen Monomeren mit 8 bis 12 C-Atomen in Betracht, welche in Gegenwart eines Kautschuks hergestellt werden. Der Kautschukgehalt beträgt 5 bis 25 Gew.-%, vorzugsweise 8 bis 17 Gew.-%.

Geeignet sind vor allem schlagfestmodifizierte Polystyrole oder Copolymere aus Styrol und anderen vinylaromatischen Verbindungen. Derartige schlagzähmodifizierte Polystyrole sind allgemein als sogenanntes HIPS bekannt und größtenteils im Handel erhältlich und weisen eine Viskositätszahl (VZ) der Hartmatrix von 50 bis 130 ml/g (0,5 %ig in Toluol bei 23°C) auf, vorzugsweise von 60 bis 90 ml/g.

Als monovinylaromatische Verbindungen kommen dabei kern- oder seitenkettenalkylierte Styrole in Betracht. Als Beispiele seien Chlorstyrol, α-Methylstyrol, p-Methylstyrol, Vinyltoluol und p-t-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmans Enzyklopädie der techn. Chemie, Band 19, Seiten 265 bis 272, Verlag Chemie, Weinheim 1980). Die Homopolymerisate können Gewichtsmittel des Molekulargewichts M_{w} von 3 000 bis 300 000 aufweisen, die nach üblichen Methoden bestimmt werden können.

Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide, Acrylamid und Methacrylamide sowie deren N,N- oder N-alkylsubstituierten Derivate mit 1 bis 10 C-Atomen im Alkylrest in Frage.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether. Solche Mischungsgrenzen sind bekannt und beispielsweise in der US-P 4 360 618, 4 405 753 und in der Veröffentlichung von J.R. Fried, G.A. Hanna, Polymer Eng. Sci., Band 22 (1982), Seite 705 ff beschrieben. Die Herstellung der Copolymeren erfolgt nach bekannten Verfahren, die beispielsweise in Ullmanns Enzyklopädie der techn. Chemie, Band 19, Seite 273 ff, Verlag Chemie, Weinheim (1980), beschrieben sind. Die Copolymerisate haben im allgemeinen Gewichtsmittel des Molekulargewichtes (M_{w}) von 10 000 bis 300 000, die nach üblichen Methoden bestimmt werden können.

Bei der Komponente C handelt es sich vorzugsweise um schlagfest modifiziertes Polystyrol.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind. Selbstverständlich sind auch andere Verfahren anwendbar, sofern die gewünschte Teilchengröße der Kautschukphase eingestellt wird.

### Komponente D

Die Schlagzähmodifier D sind erfindungsgemäß von 0 bis 50 Gew.-%, bezogen auf die gesamte Zusammensetzung, in den Zusammensetzungen enthalten. Bevorzugte Zusammensetzungen enthalten von 0 bis 40, insbesondere von 0 bis 20 Gew.-% der Komponente D.

Als Komponente D können natürliche oder synthetische Kautschuke eingesetzt werden. Neben Naturkautschuk sind als Schlagzähmodifier z.B. Polybutadien, Polyisopren oder Mischpolymerisate des Butadiens und/oder Isoprens mit Styrol und anderen Comonomeren, die eine Glasübergangstemperatur, bestimmt nach K.H. Illers und H. Breuer, Kolloidzeitschrift 190 (1), 16-34 (1963), unter -20°C aufweisen.

Bevorzugte Schlagzähmodifier D sind Blockcopolymere aus Vinylaromaten und Dienen, die sich dadurch auszeichnen, daß anstelle eines reinen Dienkautschuks ein Weichblock aus Dien und Vinylaromaten vorliegt, wobei Dien und Vinylaromaten im Weichblock statistisch verteilt sind.

Bevorzugte Vinylaromaten sind Styrol, α-Methylstyrol, Vinyltoluol oder Mischungen dieser Verbindungen. Bevorzugte Diene sind Butadien, Isopren, Piperylen, 1-Phenylbutadien oder Mischungen dieser Verbindungen. Eine besonders bevorzugte Monomerkombination ist Butadien und Styrol.

Besonders bevorzugt werden die Weichblöcke aus 31 bis 75 Gew.-% Styrol und 25 bis 69 Gew.-% Butadien aufgebaut. Ganz besonders bevorzugt werden Weichblöcke, die einen Butadienanteil von 34 bis 69 Gew.-% und einen Styrolanteil von 31 bis 66 Gew.-% enthalten.

Besonders bevorzugt werden Blockcopolymere aus Styrol und Butadien mit einer Monomerzusammensetzung aus 15 bis 66, insbesondere 25 bis 62 Gew.-% Dien und 34 bis 85, insbesondere 38 bis 75 Gew.-% Vinylaromaten.

Der Volumenanteil des Weichblocks im Festkörper des Blockcopolymeren beträgt im allgemeinen von 60 bis 95, bevorzugt von 70 bis 90, insbesondere von 80 bis 88 Vol.-%. Die Volumenanteile der aus den Vinylaromaten entstandenen Hartphase beträgt entsprechend 5 bis 40, bevorzugt 10 bis 30, insbesondere 12 bis 20 Vol.-%.

Eindeutig definiert werden die Blockcopolymere durch den Quotienten aus dem Volumenanteil der Weichblöcke und den Gew.-% an Dien in den Weichblöcken. Darüberhinaus sind die Blockcopolymere in der Regel durch Glasübergangstemperaturen von -50 bis +25, insbesondere von -50 bis +5°c gekennzeichnet.

Der Aufbau der Blockcopolymeren kann dabei entlang der Kette im statistschen Mittel homogen oder inhomogen sein. Die Kettenstruktur der Blockcopolymeren kann linear oder sternförmig sein. Der Aufbau kann beispielsweise durch die folgenden allgemeinen Formeln beschrieben werden:

(V-Q/V)ₙ x⁅(Q/V-V)ₙ-Q/V]ₘ₊₁

(V-Q/V)ₙ-V y⁅(V-Q/V)ₙ]ₘ₊₁

Q/V-(V-Q/V)ₙ y⁅(Q/V-V)ₙ]ₘ₊₁

x⁅(V-Q/V)ₙ]ₘ₊₁ y⁅(V-Q/V)ₙ-V]ₘ₊₁

x⁅(Q/V-V)ₙ]ₘ₊₁ y⁅(Q/V-V)ₙ-Q/V]ₘ₊₁

x⁅(V-Q/V)ₙ-V]ₘ₊₁

Darin steht V für eine Hartphase aus Vinylaromaten, Q/V für einen Weichblock, X für ein mindestens bifunktionellen Initiator und Y für ein Kopplungszentrum, welches mit einem mindestens bifunktionellen Kopplungsmittel gebildet wurde. Die Variablen m und n sind ganze Zahlen beginnend bei eins.

Bevorzugte Blockcopolymere haben die Struktur V-Q/V-V, X-[Q/V-V]₂ oder Y-[Q/V-V]₂, wobei der Weichblock Q/V selbst wieder in Teilblöcke unterteilt sein kann. Bevorzugt besteht der Weichblock aus 2 bis 15, insbesondere 3 bis 10 statistischen Teilblöcken.

Die Blockcopolymeren können durch lebende anionische Polymerisation in unpolaren Lösungsmitteln unter Zusatz von als Lewis-Basen wirkenden, polaren Cosolvenzien hergestellt werden. Als Lösungsmittel werden bevorzugt aliphatische Kohlenwasserstoffe wie Cyclohexan oder Methylcyclohexan eingesetzt. Als Cosolvenzien kommen Ether wie Tetrahydrofuran oder aliphatische Polyether, z.B. Diethylenglycoldimethylether oder tertiäre Amine wie Tributylamin oder Pyridin in Betracht.

Als Initiatoren für die anionische Polymerisation sind metallorganische Verbindungen, darunter Methyllithium, Ethyllithium, n-Propyllithium, n-Butyllithium, s-Butyllithium oder t-Butyllithium zu nennen.

Das Kopplungszentrum Y wird durch die Reaktion der reaktiven anionischen Kettenenden mit einem mindestens bifunktionellen Kopplungsmittel gebildet. Derartige Kopplungsmittel sind an sich bekannt. Bevorzugt werden Divinylbenzol oder epoxidierte Glycide wie epoxidiertes Leinsamenöl oder Sojaöl.

Die anionische Polymerisation wird mehrstufig durchgeführt. Ein Teil der Monomeren wird im Reaktor vorgelegt und die anionische Polymerisation durch Zugabe des Initiators gestartet. Um einen definierten aus der Monomer- und der Initiatordosierung berechenbaren Kettenaufbau zu erzielen, ist es empfehlenswert, die Reaktion bis zu hohen Umsätzen (≥99 %) laufen zu lassen, bevor die zweite Monomerzugabe erfolgt. Zwingend erforderlich ist dies jedoch nicht. Die Abfolge der Monomerzugabe richtet sich nach dem gewählten Blockaufbau. Bei monofunktioneller Initiierung wird zuerst Vinylaromat entweder vorgelegt oder direkt zudosiert. Nachfolgend sollten Dien und Vinylaromat möglichst gleichzeitig zugegeben werden. Durch die relative Dosierung an Dien zu vinylaromatischer Verbindung, die Konzentration und chemische Struktur der Lewis-Base sowie die Reaktionstemperatur wird der statistische Aufbau und die Zusammensetzung des Weichblocks Q/V bestimmt. Anschließend wird entweder die zweite Hartphase V durch Zugabe des Vinylaromaten aufpolymerisiert, oder mit einem Kopplungsmittel gekoppelt. Im Falle der bifunktionellen Initiierung wird zuerst der Weichblock Q/V aufgebaut, gefolgt von der Hartphase V.

Die Blockcopolymeren können dadurch aufgearbeitet werden, daß die Carbanionen mit einem Alkohol wie Isopropanol protoniert werden, die Reaktionsmischung angesäuert wird, z.B. mit einem Gemisch aus CO₂ und Wasser und das Lösungsmittel entfernt wird. Die Blockcopolymeren können Oxidationsinhibitoren und Antiblockmittel enthalten.

### Komponente E

Als Komponente E enthalten die Zusammensetzungen Flammschutzmittel in Mengen von 1 bis 20, bevorzugt von 1 bis 18, insbesondere von 1 bis 15 Gew.-%, bezogen auf die gesamte Zusammensetzung.

Als Flammschutzmittel können phosphororganische Verbindungen, wie Phosphate oder Phosphinoxide eingesetzt werden.

Beispiele für Phosphinoxide sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis(cyclohexyl)-phosphinoxid, Benzylbisphenylphosphinoxid, Phenylbis-(n-hexyl)-phosphinoxid. Besonders bevorzugt eingesetzt werden Triphenylphosphinoxid, Tricyclohexylphosphinoxid, Tris-(noctyl)-phosphinoxid oder Tris-(cyanoethyl)-phosphinoxid.

Als Phosphate kommen vor allem alkyl- und arylsubstituierte Phosphate in Betracht. Beispiele sind Phenylbisdodecylphosphat, Phenylbisneopentylphosphat, Phenylethylhydrogenphosphat, Phenylbis-(3,5,5-trimethylhexylphosphat), Ethyldiphenylphosphat, Bis-(2-ethylhexyl)-p-tolyl-phosphat, Tritolylphosphat, Trixylylphosphat, Trimesitylphosphat, Bis-(2-ethylhexyl)-phenylsphosphat, Tris-(nonylphenyl)-phosphat, Bis-(dodecyl)-p-(tolyl)-phosphat, Tricresylphosphat, Triphenylphosphat, Di-butylphenylphosphat, p-Tolyl-bis-(2,5,5-trimethylhexyl)-phosphat, 2-Ethylhexyldiphenylphosphat. Besonders geeignet sind Phosphorverbindungen, bei denen jedes R ein Aryl-Rest ist. Ganz besonders geeignet ist dabei Triphenylphosphat, Trixylylphosphat sowie Trimesitylphosphat. Des weiteren können auch cyclische Phosphate eingesetzt werden. Besonders geeignet ist hierbei Diphenylpentaerythritol-diphosphat.

Darüber hinaus können Mischungen unterschiedlicher Phosphorverbindungen verwendet werden. Bevorzugt werden beispielsweise Mischungen, die aufgebaut sind aus
α) mindestens einem Phosphinoxid der allgemeinen Formel I 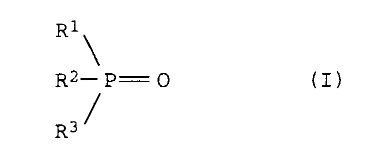 wobei R¹, R² und R³ gleiche oder verschiedene Alkyl-, Aryl-, Alkylaryl- oder Cycloalkylgruppen mit 8 bis 40 C-Atomen bedeuten und
β) mindestens einem Phosphat der allgemeinen Formel II 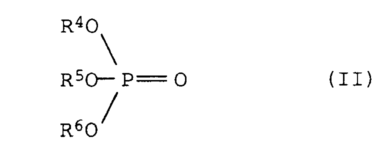 in der die Substituenten R⁴, R⁵ und R⁶ gleiche oder verschiedene Alkyl-, Aryl-, Alkylaryl- oder Cycloalkylgruppen mit 8 bis 40 C-Atomen bedeuten,
sowie
γ) einer Borverbindung.

Besonders bevorzugt sind Mischungen aus folgenden Phosphinoxid α)- und Phosphat β)-Kombinationen: Triphenylphosphinoxid-Triphenylphosphat oder Trixylylphosphat, Tricyclohexylphosphinoxid und Triphenylphosphat, Tris(cyanoethyl)phosphinoxid und Triphenylphosphat, Tris-(n-octyl)-phospinoxid und Triphenylphosphat. Es können auch Mischungen aus mehreren Phosphinoxiden und Phosphaten eingesetzt werden, wie etwa die Mischung Triphenylphosphinoxid, Triphenylphosphat, Trixylylphosphat.

Unter Borverbindungen γ) sollen sowohl anorganische als auch organische Borverbindungen verstanden werden.

Beispiele für anorganische Borverbindungen sind Borsäure, B₂O₃ und Salze der Borsäure, bevorzugt mit Alkali- oder Erdalkalimetallen. Besonders bevorzugt sind Borsäure, Natriumborat oder Boroxid.

Organische Borverbindungen y) sind beispielsweise Tetraphenylborate, z.B. Natriumtetraphenylborat und Tribenzylborat.

Die Zusammensetzung der Mischung beträgt im allgemeinen (bezogen auf den Gehalt der gesamten Mischung)
α) 1 bis 98,9, bevorzugt 10 bis 85 und insbesondere 20 bis 70 Gew.-%,
β) 1 bis 98,9, bevorzugt 10 bis 85 und insbesondere 20 bis 70 Gew.-%,
γ) 0,1 bis 70, bevorzugt 5 bis 50 und insbesondere 10 bis 30 Gew.-%.

Darüberhinaus sind phosphororganische Verbindungen der allgemeinen Formeln III bis V als Flammschutzmittel geeignet. 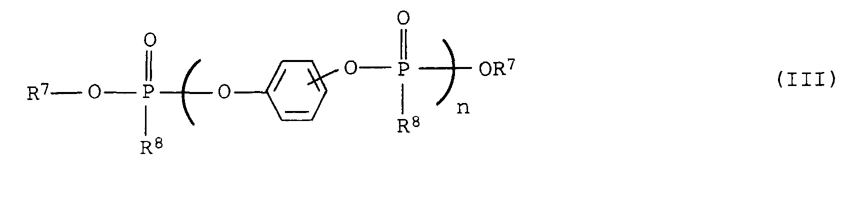 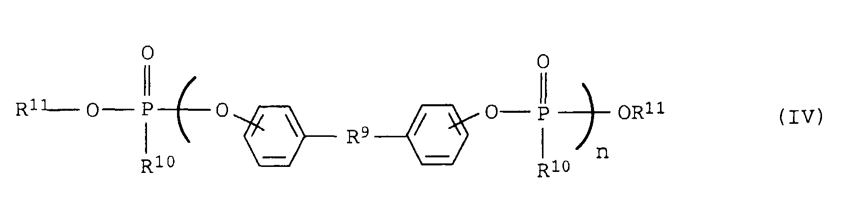 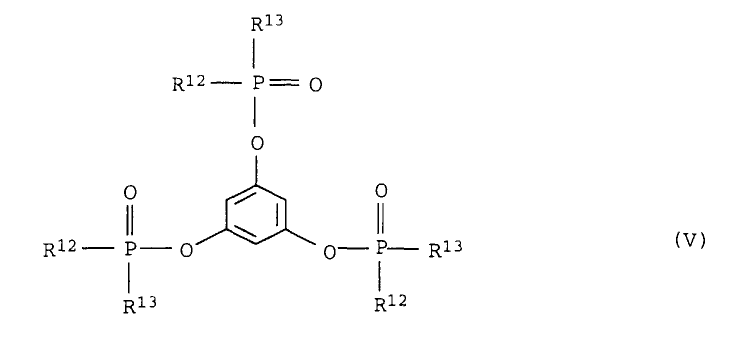 wobei R⁷ und R¹¹ Alkyl- oder Aryl-, R⁸, R¹⁰, R¹² und R¹³ Alkyl-, Aryl-, Alkoxy oder Aryloxy, n und p eine ganze Zahl von 1 bis 30 bedeuten, R⁹ Alkyl, -SO₂-, -CO-, -N=N-, R¹⁴·P=O bedeutet, wobei R¹⁴ Alkyl-, Aryl- oder Alkylaryl- ist.

Meist werden Mischungen verschiedener Oligomerer oder Isomerer dieser phosphororganischen Verbindungen eingesetzt.

Das Molekulargewicht beträgt im allgemeinen nicht mehr als 1 000, bevorzugt 150 bis 800.

### Komponente F

Als Komponente F können die Zusammensetzungen Zusatzstoffe oder Verarbeitungshilfsmittel oder deren Mischungen enthalten. Der Anteil der Komponente F beträgt im allgemeinen von 0 bis 60 Gew.-%, bezogen auf die gesamte Zusammensetzung. Bevorzugt beträgt er nicht mehr als 50 Gew.-% und insbesondere nicht mehr als 30 Gew.-%, bezogen auf die gesamte Zusammensetzung.

Als Zusatzstoffe seien genannt Hitze- und Lichtstabilisatoren, Gleit- und Entformungsmittel, Färbemittel, wie Farbstoffe und Pigmente in üblichen Mengen. Weitere Zusatzstoffe sind Verstärkungsmittel wie Glasfasern, Kohlenstoff-Fasern, aromatische Polyamidfasern und/oder Füllstoffe, Gipsfasern, synthetische Calciumsilikate, Kaolin, calciniertes Kaolin, Wollastonit, Talkum und Kreide.

Des weiteren kommen Gleitmittel wie Polyethylenwachs als Zusatzstoffe in Betracht.

Ruße oder Titandioxid können beispielsweise als Pigmente verwendet werden.

Bei Verwendung von TiO₂ liegt die mittlere Teilchengröße in der Regel im Bereich von 50 bis 400 nm, insbesondere von 150 bis 240 nm. Technische Verwendung finden Rutile und Anatas, die gegebenenfalls mit Metalloxiden, z.B. Aluminiumoxiden, Siliciumoxiden, Oxiden des Zn oder Siloxanen beschichtet sind.

Als Ruße sollen mikrokristalline, feinteilige Kohlenstoffe verstanden werden (vgl. Kunststofflexikon, 7. Auflage 1980).

Als geeignet seien die Ofenruße, Acetylenruße, Gasruße sowie die durch thermische Herstellung erhältlichen Thermalruße genannt.

Die Teilchengrößen liegen vorzugsweise im Bereich von 0,01 bis 0,1 µm und die Oberflächen im Bereich von 10² bis 10⁴ m²/g (BET/ ASTM D 3037) bei DBP-Absorptionen von 10² bis 10³ ml/100 g (ASTM D 2414).

Die Herstellung der erfindungsgemäßen thermoplastischen Formmassen erfolgt zweckmäßigerweise durch Mischen der Komponenten bei Temperaturen im Bereich von 250 bis 320°C in üblichen Mischvorrichtungen, wie Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Aus den erfindungsgemäßen thermoplastischen Formmassen lassen sich z.B. durch Spritzguß oder Extrusion Formkörper herstellen. Sie können weiterhin zur Herstellung von Folien oder Halbzeugen im Tiefzieh- oder Blasverfahren verwendet werden.

### Beispiele

Aus den folgenden Komponenten wurden Zusammensetzungen hergestellt und anwendungstechnisch untersucht:
Komponente A₁, A₂ und Aᵥ
   A₁ : Polystyrol : M_{w} = 860 000 g/mol, M_{w}/Mₙ = 1,7
   A₂ : Polystyrol : M_{w} = 1 x 10⁶ g/mol, M_{w}/Mₙ = 1,8
   Aᵥ: Polystyrol : M_{w} = 950 000 g/mol, M_{w}/Mₙ = 4,8
Komponente B₁
   Poly-2,6-dimethyl-l,4-phenylenether mit einem mittleren Molekulargewicht (M_{w}) von 40 000 g/mol.
Komponente C₁, C₂
   C₁: Schlagfestes Polystyrol (M_{w}/Mₙ = 2,4) mit 9 Gew.-% Polybutadien und Zellteilchenmorphologie, mittlere Teilchengröße der Weichkomponente von 1,9 µm. Die Viskositätszahl (VZ) der Hartmatrix betrug 80 ml/g (0,5 %ig in Toluol bei 23°C)
   C₂: Schlagfestes Polystyrol (M_{w}/Mₙ = 2,3) mit 11 Gew.-% Polybutadien und Zellteilchenmorphologie, mittlere Teilchengröße der Weichkomponente von 3,5 µm. Die Viskositätszahl (VZ) der Hartmatrix betrug 80 ml/g (0,5 %ig in Toluol bei 23°C)
Komponente D₁
   Hydriertes Styrol-Butadien-Styrol-Dreiblockcopolymer (z.B. SEPS-Blockautschuk Kraton® G 1650 der Firma Shell AG)
Komponente E₁, E₂
   E₁: Triphenylphosphat (z.B. Disflamoll® TP der Firma Bayer AG)
   E₂: Resorcinoldiphosphat (z.B. Fyroflex® RDP der Firma Akzo)
Komponente F₁
   Ruß (z.B. Black Pearls® 880 der Firma Cabot) (als 15 %iger Batch in Polystyrol, M_{w}/Mₙ = 2,4; Viskositätszahl (VZ) 80 ml/g 0,5 %ig in Toluol bei 23°C).

Die Komponenten A bis F wurden in einem Zweiwellenextruder (ZSK 30 der Firma Werner & Pfleiderer) bei 280°C gemischt, als Strang ausgetragen, abgekühlt und granuliert.

Das getrocknete Granulat wurde bei 260 bis 280°C zu Rundscheiben (Dicke 2 mm, Durchmesser 60 mm), Flachstäben (127 x 12,7 x 1,6 mm) und Normkleinstäben verarbeitet und untersucht.

### Anwendungstechnische Prüfungen

Die Schädigungsarbeit Wₛ wurde nach DIN 53 443 bestimmt. Hierzu wurden Rundscheiben mit einer Geschwindigkeit von 4,6 m/s durchstoßen. Aus dem Kraft-Weg-Diagramm wurde die Schädigungsarbeit bestimmt. Angegeben ist der Mittelwert aus fünf Einzelmessungen.

Die Wärmeformbeständigkeiten der Proben wurden an Normkleinstäben nach DIN 53 460 mittels der Vicat-Erweichungstemperatur bestimmt.

Die Kerbschlagzähigkeiten (aₖ) wurden jeweils nach ISO 179 IeA bestimmt.

Um die Flammfestigkeiten und das Abtropfverhalten zu messen, wurden die Flachstäbe nach UL-94 beflammt.

Die Einstufung eines flammgeschützten Thermoplasten in die Brandklasse UL-94 V0 erfolgt, wenn folgende Kriterien erfüllt sind:

Bei einem Satz von 5 Proben der Abmessungen 127 x 12,7 x 1,6 mm dürfen alle Proben nach zweimaliger Beflammung von 10 s Zeitdauer mit einer offenen Flamme (Höhe 19 mm) nicht länger als 10 s nachbrennen. Die Summe der Nachbrennzeiten bei 10 Beflammungen von 5 Proben darf nicht größer sein als 50 s. Es darf kein brennendes Abtropfen, vollständiges Abbrennen oder ein Nachglühen von länger als 30 s erfolgen. Die Einstufung in die Brandklasse UL 94 Vl erfordert, daß die Nachbrennzeiten nicht länger als 30 s sind und daß die Summe der Nachbrennzeiten von 10 Beflammungen von 5 Proben nicht größer als 250 s ist. Das Nachglühen darf nicht länger als 60 s dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.

Das Fließverhalten wurde mittels Kapillarrheometer bei 250°C untersucht. Die Schmelzestabilität wurde bei 320°C durch Messung im Kapillarrheometer bei einer Meßfrequenz von 55 Hz ermittelt, wobei die prozentuale Änderung der Schmelzeviskosität innerhalb von 30 Minuten als Maß für die Verarbeitungsstabilität herangezogen wurde.

Die Zusammensetzungen und Eigenschaften der thermoplastischen Formmassen sind in Tabelle 1 zusammengestellt.

**Tabelle 1**

| **Beispiel Nr.** | **V1** | **V2** | **1** | **2** | **V3** | **V4** | **3** | **4** |
|---|---|---|---|---|---|---|---|---|
| Komponente [Gew.-%] | | | | | | | | |
| A₁ | - | - | 2,5 | - | - | - | 2,5 | 2,5 |
| A₂ | - | - | - | 2,5 | - | - | - | - |
| AV | - | 2,5 | - | - | - | 2,5 | - | - |
| B₁ | 40 | 40 | 40 | 40 | 40 | 40 | 40 | 40 |
| C₁ | 44,7 | 42,2 | 42,2 | 42,2 | 42,7 | 40,2 | 40,2 | 36,2 |
| C₂ | - | - | - | - | - | - | - | 4 |
| D₁ | 3 | 3 | 3 | 3 | 3 | 3 | 3 | 3 |
| E₁ | 10 | 10 | 10 | 10 | - | - | - | - |
| E₂ | - | - | - | - | 11 | 11 | 11 | 11 |
| F | 3,3 | 3,3 | 3,3 | 3,3 | 3,3 | 3,3 | 3,3 | 3,3 |
| Eigenschaften | | | | | | | | |
| Wₛ [Nm] | 26 | 24 | 25 | 25 | 32 | 32 | 33 | 36 |
| Vicat B [°C] | 112 | 112 | 112 | 112 | 106 | 106 | 106 | 105 |
| aₖ [kJ/m²] | 9,1 | 8,9 | 9,0 | 9,2 | 10,3 | 10,0 | 10,6 | 11,5 |
| UL 94 (Stäbe abgetropft) | V-2 (5) | V-2 (5) | V-1 | V-1 | V-2 (5) | V-2 (5) | V-0 | V-0 |
| η 10 Hz [Pa·s] | 2111 | 2340 | 2176 | 2190 | - | - | - | - |
| η 100 Hz [Pa·s] | 811 | 864 | 835 | 830 | - | - | - | - |
| Δ [%] | 76 | 93 | 78 | 79 | 73 | 96 | 74 | 76 |
| V: zum Vergleich | | | | | | | | |
| Δ : (η₅' - η₃₀')/n5' x 100 [%] | | | | | | | | |

Die thermoplastischen Formmassen, die die erfindungsgemäßen Antitropfmittel enthalten, zeichnen sich durch gute mechanische Eigenschaften, gute Fließfähigkeit und geringe Abtropfneigung aus.

## Patentansprüche

1. Verwendung von Polymeren auf der Basis vinylaromatischer Monomerer mit Molekulargewichten M_{w} von mehr als 800 000 g/ mol und einer Molmassenverteilung, ausgedrückt durch das Verhältnis von Gewichtsmittelwert M_{w} zu Zahlenmittelwert Mₙ von 2 oder kleiner, als halogenfreie Antitropfmittel für thermoplastische Formmassen.

2. Verwendung nach Anspruch 1, in der die vinylaromatischen Monomeren Styrol sind.

3. Verwendung nach Anspruch 1 oder 2, in der die Polymere auf der Basis vinylaromatischer Monomerer durch anionische Dispersionspolymerisation hergestellt sind.

4. Zusammensetzungen, enthaltend
A) 0,5 bis 25 Gew.-% halogenfreie Antitropfmittel, enthaltend Polymere auf der Basis vinylaromatischer Monomerer mit Molekulargewichten (M_{w}) von mindestens 800 000 g/mol und einer Molmassenverteilung, ausgedrückt durch das Verhältnis von Gewichtsmittelwert M_{w} zu Zahlenmittelwert Mₙ von 2 oder kleiner,
B) 5 bis 97,5 Gew.-% Polyphenylenether,
C) 1 bis 93,5 Gew.-% vinylaromatische Polymere, die sich von denen im halogenfreien Antitropfmittel enthaltenen Polymeren unterscheiden,
D) 0 bis 50 Gew.-% Schlagzähmodifier,
E) 1 bis 20 Gew.-% Flammschutzmittel sowie
F) 0 bis 60 Gew.-% Zusatzstoffe oder Verarbeitungshilfsmittel oder deren Mischungen.

5. Zusammensetzungen nach Anspruch 4, enthaltend halogenfreie Antitropfmittel, in denen die vinylaromatischen Monomeren Styrol sind.

6. Zusammensetzungen nach Anspruch 4 oder 5, enthaltend halogenfreie Antitropfmittel, in denen die Polymere auf der Basis vinylaromatischer Monomerer durch anionische Dispersionspolymerisation hergestellt sind.

7. Verwendung der Zusammensetzungen gemäß Anspruch 6 zur Herstellung von Formkörpern, Folien oder Fasern.

8. Formkörper, Folien oder Fasern, enthaltend Zusammensetzungen gemäß den Ansprüchen 4 bis 6.

## Claims

1. The use of polymers based on vinylaromatic monomers having molecular weights M_{w} of more than 800,000 g/mol and a molar mass distribution, expressed by the ratio of weight average values M_{w} to a number average value Mₙ of 2 or less as halogen-free antidrip agents for thermoplastic molding materials.

2. The use as claimed in claim 1, in which the vinylaromatic monomers are styrene.

3. The use as claimed in claim 1 or 2, in which the polymers based on vinylaromatic monomers are prepared by anionic emulsion polymerization.

4. A composition containing
A) from 0.5 to 25% by weight of halogen-free antidrip agents, containing polymers based on vinylaromatic monomers having molecular weights (M_{w}) of at least 800,000 g/mol and a molar mass distribution, expressed by the ratio of weight average value M_{w} to number average value Mₙ, of 2 or less,
B) from 5 to 97.5% by weight of polyphenylene ether,
C) from 1 to 93.5% by weight of vinylaromatic polymers which differ from those in the polymers containing halogen-free antidrip agents,
D) from 0 to 50% by weight of impact modifiers,
E) from 1 to 20% by weight of flameproofing agents and
F) from 0 to 60% by weight of additives or processing assistants or mixtures thereof.

5. A composition as claimed in claim 4, containing halogen-free antidrip agents in which the vinylaromatic monomers are styrene.

6. A composition as claimed in claim 4 or 5, containing halogen-free antidrip agents in which the polymers based on vinylaromatic monomers are prepared by anionic emulsion polymerization.

7. The use of the composition as claimed in claim 6 for the production of moldings, films or fibers.

8. A molding, film or fiber containing a composition as claimed in any of claims 4 to 6.

## Revendications

1. Utilisation de polymères à base de monomères vinylaromatiques de poids moléculaires M_{w} supérieurs à 800 000 g/mole et d'une distribution de poids moléculaire, exprimée par le rapport de la moyenne pondérale M_{w} à la moyenne numérique Mₙ égale ou inférieure à 2, en tant qu'agent antigouttes exempt d'halogènes pour masses à mouler thermoplastiques.

2. Utilisation selon la revendication 1, caractérisée en ce que les monomères vinylaromatiques sont du styrène.

3. Utilisation selon la revendication 1 ou 2, caractérisée en ce que les polymères à base de monomères vinylaromatiques sont préparés par polymérisation anionique en dispersion.

4. Compositions contenant
(A) 0,5 à 25% en poids d'agent antigouttes exempt d'halogènes, contenant des polymères à base de monomères vinylaromatiques de poids moléculaires M_{w} d'au moins 800000 g/mole et d'une distribution de poids moléculaire, exprimée par le rapport de la moyenne pondérale M_{w} à la moyenne numérique Mₙ égale ou inférieure à 2,
(B) 5 à 97,5% en poids de poly(éther de phénylène),
(C) 1 à 93,5% en poids de polymères vinylaromatiques, différents des polymères contenus dans l'agent antigouttes exempt d'halogènes,
(D) 0 à 50% en poids de modificateur de dureté,
(E) 1 à 20% en poids d'agent ignifuge, et
(F) 0 à 60% en poids d'additifs ou d'auxiliaires de traitement ou de leurs mélanges.

5. Compositions selon la revendication 4, contenant un agent antigouttes exempt d'halogènes, caractérisées en ce que les monomères vinylaromatiques sont du styrène.

6. Compositions selon la revendication 4 ou 5, contenant un agent antigouttes exempt d'halogènes, caractérisées en ce que les polymères à base de monomères vinylaromatiques sont préparés par polymérisation anionique en dispersion.

7. Utilisation des compositions selon la revendication 6 pour la préparation d'articles moulés, de feuilles ou de fibres.

8. Articles moulés, feuilles ou fibres, contenant des compositions selon les revendications 4 à 6.
